# EUROPEAN PATENT APPLICATION

(11) **EP 4 541 644 A1**
(43) Date of publication of application: **23.04.2025**
(21) Application number: 22951531.7
(22) Date of filing: 21.07.2022
(51) Int. Cl.: B60L 53/80, B66C 1/12, B60S 5/06

(54) **BALANCE TESTING METHOD AND APPARATUS, AND STATION CONTROL SYSTEM**

(71) Applicant: CONTEMPORARY AMPEREX TECHNOLOGY (HONG KONG) LIMITED, Central (HK)
(72) Inventor: CHEN, Weifeng, Xiamen, Fujian 361001 (CN); QUE, Shibiao, Xiamen, Fujian 361001 (CN); WANG, Kangyu, Xiamen, Fujian 361001 (CN); CHEN, Dewei, Xiamen, Fujian 361001 (CN)
(74) Representative: Ran, Handong
(86) International application number: PCT/CN2022/106992
(87) International publication number: WO 2024/016254

(57) **Abstract**

A balance testing method and apparatus (400), and a station control system (500), which can effectively improve the safety performance of an electric device during a battery swapping process. The method comprises: during the process of performing battery swapping on an electric device, acquiring first data outputted by a first sensor; and determining, according to the first data, whether a dismounting and mounting apparatus is in a balance state, wherein the dismounting and mounting apparatus is used for dismounting a battery to be dismounted from the electric device and mounting a battery to be mounted on the electric device.

## Description

### TECHNICAL FIELD

This application relates to the technical field of batteries, and in particular, to a balance detection method and apparatus and a station control system.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery charging and swapping technology is an important factor in connection with their development.

At present, the battery in an electric vehicle can be charged through a charging apparatus to ensure the continuous operation of the electric vehicle. Additionally, the battery in an electric vehicle can also be replaced through a battery swapping station to quickly replenish energy for the underpowered electric vehicle, thus avoiding long-term charging of the battery. However, there may be unsafe situations in the current battery swapping process.

### SUMMARY

Embodiments of this application provide a balance detection method and apparatus and a station control system, so as to effectively improve safety performance of electric devices in the battery swapping process.

According to a first aspect, a balance detection method is provided. The method includes: in a process of swapping a battery of an electric device, obtaining first data output by a first sensor; and determining, based on the first data, whether a mounting/dismounting apparatus is in a balanced state, where the mounting/dismounting apparatus is configured to dismount a battery to be dismounted from the electric device and mount a battery to be mounted onto the electric device.

**In** an embodiment of this application, in the process of swapping the battery of the electric device, whether the mounting/dismounting apparatus is in a balanced state is determined based on data output by a sensor. This is easy to implement, reduces the balance detection complexity of the mounting/dismounting apparatus, and achieves a high accuracy in determining whether the mounting/dismounting apparatus is in a balanced state. In this way, if it is determined that the mounting/dismounting apparatus is in an unbalanced state, a series of measures can be taken to prevent occurrence of dangerous accidents, thus effectively improving safety performance of the electric device in the battery swapping process.

In some possible implementations, the first sensor is a weighing sensor.

The price of a weighing sensor is relatively cheap, usually around 200 yuan. Therefore, with a weighing sensor configured as the first sensor, a balance state of the mounting/dismounting apparatus can be effectively detected with relatively low detection costs.

In some possible implementations, the weighing sensor is disposed on a first surface of a connector used for connecting the mounting/dismounting apparatus, and in a direction of gravity, the first surface is a surface of the connector closer to the battery to be dismounted or the battery to be mounted; where the first data is a weight borne by the connector.

In the foregoing technical solution, the weighing sensor is disposed on the first surface of the connector, so that after the battery to be mounted or the battery to be dismounted is gripped by the mounting/dismounting apparatus, the weighing sensor can measure the weight borne by the connector easily and accurately, thus further facilitating the detection of the balance state of the mounting/dismounting apparatus.

In some possible implementations, the connector is provided in plurality, the weighing sensor is provided on each of the connectors, and the first data is a weight borne by each of the connectors.

In the foregoing technical solution, the connector is provided in plurality. On one hand, the mounting/dismounting apparatus can be connected more firmly. On the other hand, from the perspective of safety, even if some of the plurality of connectors are broken, the unbroken ones can still grip the battery to be mounted or the battery to be dismounted, thus improving the safety in the battery swapping process to some extent. In addition, the weighing sensor is provided on each of the connectors, further improving the accuracy of determining the balance state of the mounting/dismounting apparatus.

In some possible implementations, the determining, based on the first data, whether the mounting/dismounting apparatus is in a balanced state includes: obtaining preset data; and determining, based on a deviation value between the first data and the preset data, whether the mounting/dismounting apparatus is in a balanced state.

In the foregoing technical solution, the data output by the sensor is compared with the preset data to determine whether the mounting/dismounting apparatus is in a balanced state. This solution does not require complicated calculation, thus greatly reducing the processing time and improving the processing speed.

In some possible implementations, in a case that the deviation value is less than or equal to the first threshold, the mounting/dismounting apparatus is in a balanced state; and in a case that the deviation value is greater than the first threshold, the mounting/dismounting apparatus is in an unbalanced state.

In some possible implementations, the first threshold ranges from 0.1 to 0.2.

Extensive experiments prove that when the first threshold is set in the range of 0.1 to 0.2, the accuracy of the determined balance state of the mounting/dismounting apparatus is high.

In some possible implementations, the obtaining preset data includes: receiving battery information sent by the electric device, where the battery information includes a specification parameter of the battery to be dismounted; and determining the preset data based on the specification parameter.

Since different electric devices may use different types of batteries, if the preset data used for determining whether the mounting/dismounting apparatus is balanced adopts the same value in the process of swapping different types of batteries, the determined balance state of the mounting/dismounting apparatus may be opposite the actual balance state. Therefore, in the foregoing technical solution, the preset data is determined based on the specification parameter of the battery included in the battery information sent by the electric device, so that the determined preset data can match the battery of the electric device, thus greatly improving the accuracy of the determined balance state of the mounting/dismounting apparatus.

In some possible implementations, the method further includes: obtaining second data output by a second sensor; and
after determining, based on the first data, whether the mounting/dismounting apparatus is in a balanced state, determining, based on the second data, whether the mounting/dismounting apparatus is in a balanced state.

In the foregoing technical solution, on the basis of determining, based on the first data output by the first sensor, whether the mounting/dismounting apparatus is in a balanced state, whether the mounting/dismounting apparatus is in a balanced state is determined again in combination with the second data output by the second sensor, that is, the balance state of the mounting/dismounting apparatus is determined based on a plurality of parameters. This can further improve the accuracy of determining whether the mounting/dismounting apparatus is in a balanced state, thus further improving the safety performance of the electric device in the battery swapping process.

In some possible implementations, the second sensor is a balance sensor, and the second data is a tilt angle of the mounting/dismounting apparatus.

One of the biggest differences between the balanced state and unbalanced state of the mounting/dismounting apparatus is the difference in tilt angle. If the mounting/dismounting apparatus is in a balanced state, the tilt angle may be zero or close to zero; if the mounting/dismounting apparatus is in an unbalanced state, the tilt angle is relatively large. Therefore, when a balance sensor is configured as the second sensor, the second data is the tilt angle of the mounting/dismounting apparatus, so that whether the mounting/dismounting apparatus is in a balanced state can be easily determined, reducing the detection complexity.

In some possible implementations, the balance sensor is disposed on a second surface of the mounting/dismounting apparatus, and in a direction opposite the gravity, the second surface is a surface of the mounting/dismounting apparatus farther away from the battery to be dismounted or the battery to be mounted.

In the foregoing technical solution, the balance sensor is disposed on the second surface of the mounting/dismounting apparatus, making it convenient for the balance sensor to collect the tilt angle of the mounting/dismounting apparatus, thus greatly improving the detection efficiency.

In some possible implementations, in a case that the second data is less than or equal to a second threshold, the mounting/dismounting apparatus is in a balanced state; and in a case that the second data is greater than the second threshold, the mounting/dismounting apparatus is in an unbalanced state.

Normally, in a case that the mounting/dismounting apparatus is in a balanced state, the second data such as the tilt angle is small, for example, being zero; and in a case that the mounting/dismounting apparatus is in an unbalanced state, the second data such as the tilt angle is large. Therefore, in the foregoing technical solution, the second data is compared with a threshold; when the second data is less than or equal to the second threshold, it is determined that the mounting/dismounting apparatus is in a balanced state; and when the second data is greater than the second threshold, it is determined that the mounting/dismounting apparatus is in an unbalanced state. The determination method is consistent with the actual situation, which is not only easy to implement, but also achieves high accuracy.

In some possible implementations, the mounting/dismounting apparatus includes a plurality of claw arms, the plurality of claw arms being configured to grip the battery to be dismounted and the battery to be mounted, and the method further includes: determining expansion states of the plurality of claw arms before the plurality of claw arms grip the battery to be dismounted and the battery to be mounted; and/or determining expansion states of the plurality of claw arms after the plurality of claw arms grip the battery to be dismounted and the battery to be mounted.

In some cases, only some of the plurality of claw arms of the mounting/dismounting apparatus can normally extend and retract. In such cases, the mounting/dismounting apparatus may not be able to grip the battery to be dismounted or the battery to be mounted, thus affecting the normal battery swapping. In the foregoing technical solution, the expansion states of the plurality of claw arms are determined in the battery swapping process, and then a next operation is determined based on the expansion states of the plurality of claw arms, thus ensuring the normal battery swapping.

**In** some possible implementations, the determining expansion states of the plurality of claw arms includes: obtaining third data output by the second sensor; under a condition that the third data is less than or equal to the second threshold, determining that the expansion states of the plurality of claw arms are normal; or under a condition that the third data is greater than the second threshold, determining that the expansion states of the plurality of claw arms are abnormal.

Normally, in a case that the expansion states of the plurality of claw arms are normal, the mounting/dismounting apparatus will hardly tilt, so the third data such as the tilt angle is small, for example, being zero; and in a case that the expansion states of the plurality of claw arms are normal, the mounting/dismounting apparatus may tilt, so the third data such as the tilt angle is large. Therefore, in the foregoing technical solution, the third data is compared with a threshold; when the third data is less than or equal to the threshold, it is determined that the expansion states of the plurality of claw arms are normal; and when the third data is greater than the second threshold, it is determined that the expansion states of the plurality of claw arms are normal. This method is not only easy to implement, but also achieves high accuracy.

In some possible implementations, the method further includes: receiving state information sent by the electric device, where the state information includes the expansion states of the plurality of claw arms.

In the foregoing technical solution, in addition to determining the expansion states of the plurality of claw arms based on the third data output by the second sensor, the expansion states of the plurality of claw arms are also determined based on the state information sent by the electric device, that is, the expansion states of the plurality of claw arms are determined based on a plurality of parameters, so that the determined expansion states of the plurality of claw arms are more accurate.

In some possible implementations, the second threshold is 1.3°.

Extensive experiments prove that when the second threshold is set to 1.3°, the accuracy of the determined balance state of the mounting/dismounting apparatus and/or the expansion states of the plurality of claw arms is high.

In some possible implementations, the method further includes: determining a lock state of a locking portion of the battery to be dismounted or the battery to be mounted.

A locking mechanism may not unlock the locking portion of the battery to be dismounted before the battery to be dismounted is dismounted, or the locking mechanism may not lock the locking portion of the battery to be mounted after the battery to be mounted is mounted. This not only affects the normal battery swapping, but also may cause serious safety accidents. Therefore, in the foregoing technical solution, the lock state of the locking portion of the battery to be dismounted or the battery to be mounted is also determined, which can ensure the normal battery swapping and avoid the occurrence of safety accidents, thus improving the safety of the entire battery swapping process.

In some possible implementations, the determining a lock state of a locking portion of the battery to be dismounted or the battery to be mounted includes: after the mounting/dismounting apparatus dismounts the battery to be dismounted, obtaining fourth data output by the first sensor; and under a condition that a difference between the fourth data and a target weight is less than or equal to a third threshold, determining that the locking portion is in an unlocked state; or under a condition that a difference between the fourth data and a target weight is greater than a third threshold, determining that the locking portion is in a locked state; where the target weight is a sum of a weight of the mounting/dismounting apparatus and a weight of the battery to be dismounted.

In some possible implementations, the method further includes: receiving lock information sent by the electric device, where the lock information includes the lock state of the locking portion.

In the foregoing technical solution, in addition to determining the lock state of the locking portion based on the fourth data output by the first sensor, the lock state of the locking portion is also determined based on the lock information sent by the electric device, that is, the expansion states of the plurality of claw arms are determined based on a plurality of parameters, so that the determined lock state of the locking portion is more accurate.

According to a second aspect, a balance detection apparatus is provided, configured to perform the method according to the first aspect or the implementations of the first aspect. Specifically, the apparatus includes functional modules configured to perform the method according to the first aspect or the implementations of the first aspect.

According to a third aspect, a station control system is provided, applied to a battery swapping station. The station control system includes: a memory configured to store a program; and a processor configured to execute the program stored in the memory, where when the program stored in the memory is executed, the processor is configured to execute the method according to the first aspect or the implementations of the first aspect.

According to a fourth aspect, a computer-readable storage medium is provided, configured to store a computer program, where the computer program causes a computer to perform the method according to the first aspect or the implementations of the first aspect.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a battery swapping system according to an embodiment of this application.
FIG. 2 is a schematic flowchart of a balance detection method according to an embodiment of this application.
FIG. 3 is a schematic diagram of steps of balance detection according to an embodiment of this application.
FIG. 4 is a schematic block diagram of a balance detection apparatus according to an embodiment of this application.
FIG. 5 is a schematic block diagram of a station control system according to an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

With the development of new energy technology, the application of batteries is becoming increasingly extensive. For example, batteries can be used as power sources to provide power for electric devices, reducing the use of non-renewable resources. In a case that the power of the battery in an electric device is not enough to support continuous operation of the electric device, charging devices such as charging piles can be used to charge the electric device, that is, to charge the battery in the electric device, so as to implement charge-discharge cycles of the battery. However, it takes a long time to charge the battery, which limits the continuous use of the electric device.

To improve the continuous utilization of electric devices, battery swapping technology has emerged. The battery swapping technology adopts the "vehicle-battery separation" method to provide battery swapping service for electric devices through battery swapping stations. To be specific, a battery can be quickly removed from or installed into an electric device. The battery removed from the electric device can be put into the battery swapping cabinet of the battery swapping station for charging, in preparation for battery swapping for the electric device that enters the battery swapping station later.

When the electric device is a heavy truck, typically a crane is used to complete the battery swapping. Specifically, after the heavy truck stops at the battery swapping lane and the locking mechanism of the heavy truck has unlocked the locking portion, the spreader on the crane grips the battery to be dismounted from above the heavy truck and puts that battery into the battery storage mechanism. After that, the spreader grips the battery to be mounted from above the battery storage mechanism, hoists the battery to be mounted, and places it on the heavy truck, and the locking mechanism locks the locking portion, thus implementing the battery swapping of the heavy truck.

However, the spreader may become unbalanced during operation. For example, the steel wire rope for connecting the crane and the spreader is broken, causing the spreader to be unbalanced. Because the battery of the heavy truck usually weighs several tons, if the spreader is unbalanced in the process of transporting the battery to be dismounted to the battery storage mechanism or transporting the battery to be mounted from the battery storage mechanism to the heavy truck, the battery gripped by the spreader may fall off and cause extremely serious safety accidents such as hitting people (such as the staff of the battery swapping station or the driver of the heavy truck).

In view of this, an embodiment of this application provides a balance detection method, so as to determine, in the process of swapping a battery of an electric device, whether a mounting/dismounting apparatus is in a balanced state based on data output by a sensor. This method is easy to implement, reduces the balance detection complexity of the mounting/dismounting apparatus, and achieves a high accuracy in determining whether the mounting/dismounting apparatus is in a balanced state, thus effectively improving safety performance of the electric device in the battery swapping process.

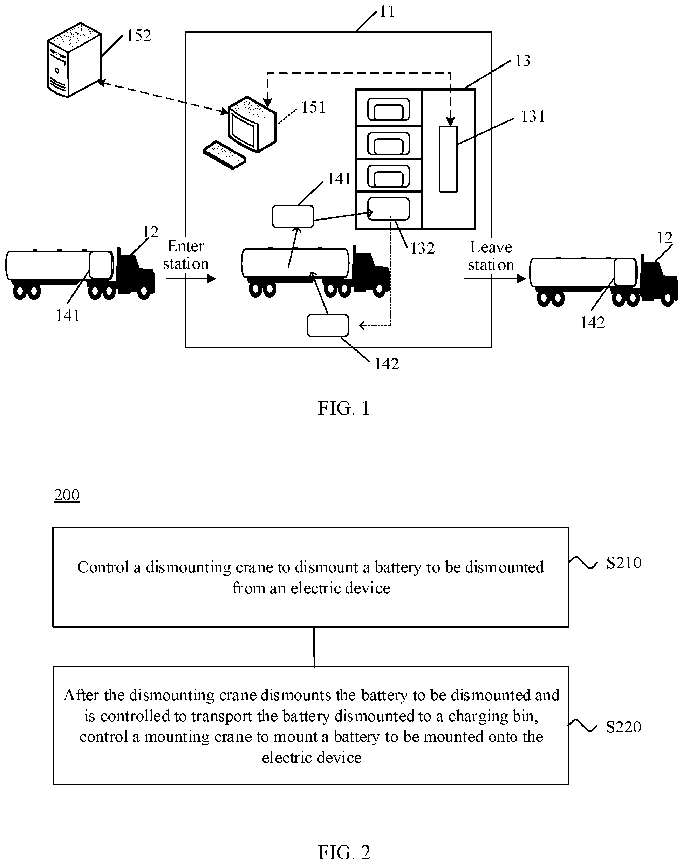

FIG. 1 is a schematic diagram of an application scenario of a balance detection method according to an embodiment of this application. As shown in FIG. 1, the application scenario of the balance detection method may involve a battery swapping station 11, an electric device 12, and a battery.

The battery swapping station 11 can refer to a place of providing battery swapping service for electric devices. For example, the battery swapping station 11 may be a fixed place, or the battery swapping station 11 may be a movable place such as a mobile battery swapping vehicle, which is not limited herein.

The electric device 12 can be detachably connected to the battery. In some examples, the electric device 12 may be a vehicle that uses a power battery as a power source, such as a car or a heavy truck.

The battery may include a battery provided in the electric device 12 and a battery located in the battery swapping station 11 for battery swapping. For ease of distinction, as shown in FIG. 1, the battery to be dismounted in the electric device 12 is marked as a battery 141, and the battery used for battery swapping in the battery swapping station is marked as a battery 142. In terms of category, the battery may be a lithium-ion battery, a lithium metal battery, a lead-acid battery, a nickel-cadmium battery, a nickel-metal hydride battery, a lithium-sulfur battery, a lithium-air battery, a sodium-ion battery, or the like. This is not limited in the embodiments of this application. In terms of battery scale, the battery may be a battery pack, a cell/battery cell, or a battery module.

In addition to being used as a power source to supply power to the motor of the electric device, the battery can also supply power to other electric components in the electric device. For example, the battery can also supply power to the air conditioner in the vehicle, car player, and the like.

After the electric device 12 with the battery 141 is driven into the battery swapping station 11, the battery swapping station 11 uses a battery swapping apparatus to remove the battery 141 from the electric device 12, take out the battery 142 from the battery swapping station 11, and then mount the battery 142 onto the electric device 12. Then, the electric device 12 with the battery 142 mounted can leave the battery swapping station 11. Through this battery swapping technology, electric devices can be quickly replenished with energy in a few minutes or even tens of seconds, improving user experience.

As shown in FIG. 1, the battery swapping station 11 may be equipped with a battery swapping cabinet 13. The battery swapping cabinet 13 includes a battery management unit (battery management unit, BMU) 131. In addition, the battery swapping cabinet 13 can also be provided with a plurality of charging bins 132, and batteries for battery swapping can be placed in the charging bins 132.

The battery swapping station 11 can also be correspondingly equipped with a management apparatus. The management apparatus may adopt a centralized structure or a distributed structure, which is not limited herein. The management apparatus may be disposed inside the battery swapping station 11 or outside the battery swapping station 11. In a case that the management apparatus adopts a distributed structure, the management apparatus may be partially disposed inside the battery swapping station 11 and partially disposed outside the battery swapping station 11. For example, as shown in FIG. 1, the management apparatus may include a station control system 151 inside the battery swapping station 11 and a cloud server 152 outside the battery swapping station 11, which is not limited herein.

Optionally, the BMU 131 can communicate and interact with other units, modules, apparatuses, and the like in wired or wireless mode. The station control system 151 can communicate and interact with other units, modules, apparatuses, and the like in wired or wireless mode. The wired communication mode may include, for example, control area network (control area network, CAN) communication mode and daisy chain (daisy chain) communication mode. The wireless communication mode may include, for example, Bluetooth communication, wireless fidelity (wireless fidelity, WIFI) communication, and ZigBee communication, which is not limited herein.

For example, the station control system 151 can communicate with the BMU 131 to obtain related information of the battery 141 on the electric device 12 or the battery 142 in the charging bin 133. For another example, the station control system 151 can communicate with the cloud server 152 to obtain related information of the battery 141 on the electric device 12 or the battery 142 in the charging bin 133.

FIG. 2 is a schematic flowchart of a balance detection method 200 according to an embodiment of this application. The method 200 may include at least some of the following steps.

S210. In a process of swapping a battery of an electric device, obtain first data output by a first sensor.

S220. Determine, based on the first data, whether a mounting/dismounting apparatus is in a balanced state, where the mounting/dismounting apparatus is configured to dismount a battery to be dismounted from the electric device and mount a battery to be mounted onto the electric device.

The method 200 can be applied to a battery swapping station. As mentioned above, the battery swapping station may be a fixed place or a movable place. The method 200 may be performed by a management apparatus in the battery swapping station, for example, by a station control system, such as the station control system 151 in FIG. 1. For example, the station control system can perform the method 200 after the electric device stops at a battery swapping lane of the battery swapping station.

Optionally, the battery to be dismounted may be an insufficient-voltage battery, and the battery to be mounted may be a fully charged battery.

Alternatively, the battery to be dismounted may be a faulty battery, such as a battery that has undergone thermal runaway or deformation. In this case, the battery to be mounted may be a fully charged battery, or a battery that has the same power as the battery to be dismounted, but has not undergone thermal runaway or deformation.

The electric device may be an electric vehicle, a ship, spacecraft, or the like. The electric vehicle may be, for example, a heavy truck, such as a sprinkler, a fire truck, a dump truck, or a cargo truck. According to analysis, about 7 million heavy trucks are in use, more than 70% of which operate 24 hours a day (two shifts or three shifts). In this case, when the electric device is a heavy truck, the battery swapping mode can improve experience of using the heavy truck. Moreover, for heavy trucks, compared with charging, the battery swapping mode can effectively solve the pain points such as the scarce charging spaces, large battery capacity, and long charging time.

When the electric device is a heavy truck, the mounting/dismounting apparatus may be a spreader. When the electric device is a passenger car, the mounting/dismounting apparatus may be a rail guided vehicle (rail guided vehicle, RGV) or an automated guided vehicle (automated guided vehicle, AGV).

Optionally, the first sensor may collect the first data in real time and output the first data in real time.

Optionally, the first sensor may collect the first data at preset intervals and output the first data at preset intervals. For example, the preset interval may be 10 ms.

In the embodiment of this application, in the process of swapping a battery of an electric device, whether a mounting/dismounting apparatus is in a balanced state is determined based on data output by a sensor. This method is easy to implement, reduces the balance detection complexity of the mounting/dismounting apparatus, and achieves a high accuracy in determining whether the mounting/dismounting apparatus is in a balanced state. In this way, if it is determined that the mounting/dismounting apparatus is in an unbalanced state, a series of measures can be taken to prevent occurrence of dangerous accidents, thus effectively improving safety performance of the electric device in the battery swapping process.

In some embodiments, the first sensor is a weighing sensor. In a case that the first sensor is a weighing sensor, the first data is a weight value.

The price of a weighing sensor is relatively cheap, usually around 200 yuan. Therefore, with a weighing sensor configured as the first sensor, a balance state of the mounting/dismounting apparatus can be effectively detected with relatively low detection costs.

Optionally, the weighing sensor may be disposed on a first surface of a connector used for connecting the mounting/dismounting apparatus, where in a direction of gravity, the first surface is a surface of the connector closer to the battery to be dismounted or the battery to be mounted. In other words, the weighing sensor is disposed below the connector.

It should be understood that in the embodiments of this application, "above" and "below" are relative to the direction of gravity.

In this case, after the battery to be mounted or dismounted is gripped by the mounting/dismounting apparatus, the connector is subjected to force and thus exerts pressure on the weighing sensor, so the first data is the weight borne by the connector. For example, the weight borne by the connector may be a sum of a weight of the battery to be dismounted or the battery to be mounted and a weight of the mounting/dismounting apparatus.

When the electric device is a heavy truck, the connector may be a steel wire rope for connecting the spreader and the crane.

In this technical solution, the weighing sensor is disposed on the first surface of the connector, so that after the battery to be mounted or the battery to be dismounted is gripped by the mounting/dismounting apparatus, the weighing sensor can measure the weight borne by the connector easily and accurately, thus further facilitating the detection of the balance state of the mounting/dismounting apparatus.

Optionally, one connector may be provided. Alternatively, in order to connect the mounting/dismounting apparatus more firmly and for safety reasons, a plurality of connectors may be provided. For example, three or four connectors may be provided. In this way, even if some of the plurality of connectors are broken, the unbroken ones can still grip the battery to be mounted or the battery to be dismounted, thus improving the safety in the battery swapping process to some extent.

When four connectors are provided, the mounting/dismounting apparatus can maintain a balanced state more easily.

In a case that a plurality of connectors are provided, a weighing sensor can be provided on each of the connectors. In this case, the first data is a weight borne by each of the connectors. For example, it is assumed that the weight of the battery to be dismounted is 2.9 tons, the weight of the mounting/dismounting apparatus is 1.1 tons, four connectors are provided, with a weighing sensor provided on each of the connectors, and the mounting/dismounting apparatus is in a balanced state. Then the first data is (2.9+1.1)/4=1 ton.

In the foregoing technical solution, the connector is provided in plurality. On one hand, the mounting/dismounting apparatus can be connected more firmly. On the other hand, from the perspective of safety, even if some of the plurality of connectors are broken, the unbroken ones can still grip the battery to be mounted or the battery to be dismounted, thus improving the safety in the battery swapping process to some extent. In addition, the weighing sensor is provided on each of the connectors, further improving the accuracy of determining the balance state of the mounting/dismounting apparatus.

In some other embodiments, the first sensor may be a balance sensor. In this case, the first data may be a tilt angle of the mounting/dismounting apparatus.

Optionally, the balance sensor may be disposed on a second surface of the mounting/dismounting apparatus, where the second surface is a surface of the mounting/dismounting apparatus farther away from the battery to be dismounted or the battery to be mounted in a direction opposite the gravity. In other words, the balance sensor is disposed at the top of the mounting/dismounting apparatus.

Optionally, one balance sensor may be provided.

For ease of description, the first sensor being a weighing sensor and the number of weighing sensors being four are taken as an example in the following descriptions. It should be understood that the embodiments of this application are not limited thereto.

**In** some embodiments, S220 may specifically include: obtaining preset data; and determining, based on a deviation value between the first data and the preset data, whether the mounting/dismounting apparatus is in a balanced state.

The preset data may be a sum of the weight of the battery to be dismounted (or the battery to be mounted) and the weight of the mounting/dismounting apparatus. Still referring to the above example, assuming that the weight of the battery to be dismounted is 2.9 tons and the weight of the mounting/dismounting apparatus is 1.1 tons, the preset data is 1 ton.

Optionally, the preset data may be a fixed value.

Since different electric devices may use different types of batteries and different types of batteries may have different weights, if the preset data adopts the same value in the process of swapping different types of batteries, the determined balance state of the mounting/dismounting apparatus may be opposite the actual balance state. Therefore, optionally, the preset data may vary with the battery to be dismounted or the battery to be mounted. That is, different batteries to be dismounted or mounted correspond to different preset data.

In this case, the obtaining preset data may include: receiving battery information sent by the electric device, where the battery information may include a specification parameter of the battery to be dismounted; and determining the preset data based on the specification parameter.

The specification parameter may include a battery model. The weight of the battery can be determined based on the battery model, and thus the preset data is determined.

For example, the battery information sent by the electric device can be received after the electric device enters the battery swapping station. Optionally, the battery information sent by the electric device can be received in wireless communication mode. For example, the battery information is received through Bluetooth communication.

In the foregoing technical solution, the preset data is determined based on the specification parameter of the battery included in the battery information sent by the electric device, so that the determined preset data can match the battery of the electric device, thus greatly improving the accuracy of the determined balance state of the mounting/dismounting apparatus.

Optionally, the deviation value between the first data and the preset data may be a difference between the first data and the preset data or a quotient between the first data and the preset data.

The deviation value between the first data and the preset data being a difference is used as an example for description. In a case that the deviation value is less than or equal to the first threshold, the mounting/dismounting apparatus is in a balanced state; and in a case that the deviation value is greater than the first threshold, the mounting/dismounting apparatus is in an unbalanced state.

Optionally, the first threshold may range from 0.1 ton to 0.2 ton.

Extensive experiments prove that when the first threshold is set in the range of 0.1 to 0.2, the accuracy of the determined balance state of the mounting/dismounting apparatus is high.

It should be noted that if a deviation value between some of the four pieces of first data and the preset data is greater than the first threshold, it can be determined that the mounting/dismounting apparatus is in an unbalanced state.

If the mounting/dismounting apparatus is in an unbalanced state, the mounting/dismounting apparatus can be controlled to stop working, and an alarm signal is output. For example, an error signal is output to the display of the battery swapping station. For another example, the battery swapping station is controlled to give out alarm sounds, such as buzzing. For another example, a voice alarm signal is broadcast.

Typically, a battery base of the electric device includes a guide bar, and after the battery to be dismounted or the battery to be mounted comes into contact with the guide bar, the guide bar may share part of the weight of the battery to be dismounted or the battery to be mounted. In this case, if the first sensor is a weighing sensor, the first data output by the weighing sensor may be inaccurate, which may lead to the problem that the determined balance state of the mounting/dismounting apparatus is inaccurate. For example, the steel wire rope is actually broken, but the spreader is determined to be in a balanced state, so the spreader is controlled to continue working. It easily happens that the battery gripped by the spreader falls down.

Therefore, to improve the accuracy of determining the balance state of the mounting/dismounting apparatus, the method 200 further includes: obtaining second data output by a second sensor; and after determining, based on the first data, whether the mounting/dismounting apparatus is in a balanced state, determining, based on the second data, whether the mounting/dismounting apparatus is in a balanced state.

Certainly, it may alternatively be: determining, based on both the first data and the second data, whether the mounting/dismounting apparatus is in a balanced state; or first determining, based on the second data, whether the mounting/dismounting apparatus is in a balanced state, and then determining, based on the first data, whether the mounting/dismounting apparatus is in a balanced state.

Optionally, the second sensor may collect the second data in real time and output the second data in real time.

Optionally, the second sensor may collect the second data at preset intervals and output the second data at preset intervals. For example, the preset interval may be 10 ms.

Optionally, the first sensor and the second sensor may collect data at the same time or at different times, which is not specifically limited in the embodiments of this application.

**In** this technical solution, on the basis of determining, based on the first data output by the first sensor, whether the mounting/dismounting apparatus is in a balanced state, whether the mounting/dismounting apparatus is in a balanced state is determined again in combination with the second data output by the second sensor, that is, the balance state of the mounting/dismounting apparatus is determined based on a plurality of parameters. This can further improve the accuracy of determining whether the mounting/dismounting apparatus is in a balanced state, thus further improving the safety performance of the electric device in the battery swapping process.

In some embodiments, the second sensor is a balance sensor. In this case, the second data may be a tilt angle of the mounting/dismounting apparatus.

One of the biggest differences between the balanced state and unbalanced state of the mounting/dismounting apparatus is the difference in tilt angle. If the mounting/dismounting apparatus is in a balanced state, the tilt angle may be zero or close to zero; if the mounting/dismounting apparatus is in an unbalanced state, the tilt angle is relatively large. Therefore, when a balance sensor is configured as the second sensor, the second data is the tilt angle of the mounting/dismounting apparatus, so that whether the mounting/dismounting apparatus is in a balanced state can be easily determined, reducing the detection complexity.

Optionally, the balance sensor may be disposed on a second surface of the mounting/dismounting apparatus, where the second surface is a surface of the mounting/dismounting apparatus farther away from the battery to be dismounted or the battery to be mounted in a direction opposite the gravity.

In the foregoing technical solution, the balance sensor is disposed on the second surface of the mounting/dismounting apparatus, making it convenient for the balance sensor to collect the tilt angle of the mounting/dismounting apparatus, thus greatly improving the detection efficiency.

Optionally, one balance sensor may be provided. In this case, the second data also includes one piece of data.

Certainly, the second sensor may alternatively be a gravity sensor. Specifically, when the first sensor is a gravity sensor, the second sensor may be a balance sensor; when the first sensor is a balance sensor, the second sensor may be a gravity sensor.

The determining, based on the second data, whether the mounting/dismounting apparatus is in a balanced state may specifically include: in a case that the second data is less than or equal to a second threshold, determining that the mounting/dismounting apparatus is in a balanced state; and in a case that the second data is greater than the second threshold, determining that the mounting/dismounting apparatus is in an unbalanced state.

When the second data is less than or equal to the second threshold, it indicates that the mounting/dismounting apparatus has a small tilt angle or does not tilt, so it can be determined that the mounting/dismounting apparatus is in a balanced state. When the second data is greater than the second threshold, it indicates that the mounting/dismounting apparatus has an excessively large tilt angle and the mounting/dismounting apparatus may have been shaken or tilted, so it can be determined that the mounting/dismounting apparatus is in an unbalanced state.

Optionally, the second threshold may be, for example, 1.3°. Extensive experiments prove that when the second threshold is set to 1.3°, the accuracy of the determined balance state of the mounting/dismounting apparatus is high.

Normally, in a case that the mounting/dismounting apparatus is in a balanced state, the second data such as the tilt angle is small, for example, being zero; and in a case that the mounting/dismounting apparatus is in an unbalanced state, the second data such as the tilt angle is large. Therefore, in the foregoing technical solution, the second data is compared with a threshold; when the second data is less than or equal to the second threshold, it is determined that the mounting/dismounting apparatus is in a balanced state; and when the second data is greater than the second threshold, it is determined that the mounting/dismounting apparatus is in an unbalanced state. The determination method is consistent with the actual situation, which is not only easy to implement, but also achieves high accuracy.

It should be noted that if it is determined, based on the first data, that the mounting/dismounting apparatus is in a balanced state, but it is determined, based on the second data, that the mounting/dismounting apparatus is in an unbalanced state, it can be determined that the mounting/dismounting apparatus is in an unbalanced state. Similarly, if it is determined, based on the first data, that the mounting/dismounting apparatus is in an unbalanced state, but it is determined, based on the second data, that the mounting/dismounting apparatus is in a balanced state, it can be determined that the mounting/dismounting apparatus is in an unbalanced state.

Normally, the mounting/dismounting apparatus may include an electric push rod, the electric push rod includes a plurality of claw arms, for example, four claw arms, and the plurality of claw arms are configured to grip the battery to be dismounted and the battery to be mounted. Specifically, before the mounting/dismounting apparatus dismounts the battery to be dismounted, the plurality of claw arms need to extend to grip the battery to be dismounted. After the mounting/dismounting apparatus transports the battery to be dismounted to the battery storage mechanism, the plurality of claw arms need to retract. Similarly, before the mounting/dismounting apparatus grips the battery to be mounted from the battery storage mechanism, the plurality of claw arms need to extend; and after the battery to be mounted is mounted on the electric device, the plurality of claw arms need to retract. However, in some cases, only some of the plurality of claw arms can normally extend and retract. In such cases, the mounting/dismounting apparatus may not be able to grip the battery to be dismounted or the battery to be mounted, thus affecting the normal battery swapping.

Therefore, the method 200 may further include: determining expansion states of the plurality of claw arms before the plurality of claw arms grip the battery to be dismounted and the battery to be mounted; and/or determining expansion states of the plurality of claw arms after the plurality of claw arms grip the battery to be dismounted and the battery to be mounted.

If some of the plurality of claw arms do not extend before the plurality of claw arms grip the battery to be dismounted and the battery to be mounted, or some of the plurality of claw arms do not retract after the plurality of claw arms grip the battery to be dismounted and the battery to be mounted, the mounting/dismounting apparatus may tilt.

Therefore, the determining expansion states of the plurality of claw arms may include: obtaining third data output by the second sensor; under a condition that the third data is less than or equal to the second threshold, determining that the expansion states of the plurality of claw arms are normal; or under a condition that the third data is greater than the second threshold, determining that the expansion states of the plurality of claw arms are abnormal.

That the expansion states of the plurality of claw arms are normal may be understood as: the plurality of claw arms have all extended before the plurality of claw arms grip the battery to be dismounted and the battery to be mounted; or the plurality of claw arms have all retracted after the plurality of claw arms grip the battery to be dismounted and the battery to be mounted.

Optionally, when the second sensor is a balance sensor, the third data is a tilt angle.

Normally, in a case that the expansion states of the plurality of claw arms are normal, the mounting/dismounting apparatus will hardly tilt, so the third data such as the tilt angle is small, for example, being zero; and in a case that the expansion states of the plurality of claw arms are normal, the mounting/dismounting apparatus may tilt, so the third data such as the tilt angle is large. Therefore, in the foregoing technical solution, the third data is compared with a threshold; when the third data is less than or equal to the threshold, it is determined that the expansion states of the plurality of claw arms are normal; and when the third data is greater than the second threshold, it is determined that the expansion states of the plurality of claw arms are normal. This method is not only easy to implement, but also achieves high accuracy.

If the expansion states of the plurality of claw arms are abnormal, the mounting/dismounting apparatus can be controlled to stop working, and an alarm signal is output. For example, an error signal is output to the display of the battery swapping station. For another example, the battery swapping station is controlled to give out alarm sounds, such as buzzing. For another example, a voice alarm signal is broadcast.

In some cases, only some of the plurality of claw arms of the mounting/dismounting apparatus can normally extend and retract. In such cases, the mounting/dismounting apparatus may not be able to grip the battery to be dismounted or the battery to be mounted, thus affecting the normal battery swapping. In the foregoing technical solution, the expansion states of the plurality of claw arms are determined in the battery swapping process, and then a next operation is determined based on the expansion states of the plurality of claw arms, thus ensuring the normal battery swapping.

To make the determined expansion states of the plurality of claw arms more accurate, further, the method 200 may further include: receiving state information sent by the electric device, where the state information includes the expansion states of the plurality of claw arms.

Optionally, the state information sent by the electric device can be received in wireless communication mode. For example, the state information is received through Bluetooth communication.

Optionally, the expansion states of the plurality of claw arms may be determined based on the received state information first, and then the expansion states of the plurality of claw arms may be determined again based on the third data; or the expansion states of the plurality of claw arms may be determined based on the third data first, and then the expansion states of the plurality of claw arms may be determined based on the received state information; or the expansion states of the plurality of claw arms may be determined based on both the state information and the third data.

In the foregoing technical solution, in addition to determining the expansion states of the plurality of claw arms based on the third data output by the second sensor, the expansion states of the plurality of claw arms are also determined based on the state information sent by the electric device, that is, the expansion states of the plurality of claw arms are determined based on a plurality of parameters, so that the determined expansion states of the plurality of claw arms are more accurate.

A locking mechanism may not unlock the locking portion of the battery to be dismounted before the battery to be dismounted is dismounted, or the locking mechanism may not lock the locking portion of the battery to be mounted after the battery to be mounted is mounted. This not only affects the normal battery swapping, but also may cause serious safety accidents. For example, after the electric device has completed the battery swapping and left the battery swapping station, if the locking portion of the battery mounted is not locked, the battery may fall off during driving of the electric device.

Therefore, further, the method 200 may further include: determining a lock state of the locking portion of the battery to be dismounted or the battery to be mounted.

The lock state of the locking portion may be determined based on the weight borne by the mounting/dismounting apparatus. Specifically, if the locking portion is in an unlocked state before the battery to be dismounted is dismounted, the weight borne by the mounting/dismounting apparatus is a sum of the weight of the mounting/dismounting apparatus itself and the weight of the battery to be dismounted after the battery to be dismounted is dismounted. If the locking portion is in a locked state before the battery to be dismounted is dismounted, the mounting/dismounting apparatus is in a full-load state, that is, the weight borne by the mounting/dismounting apparatus includes the weight of the mounting/dismounting apparatus itself and the weight of the electric device, after the battery to be dismounted is dismounted. If the electric device is also loaded with cargo, the weight borne by the mounting/dismounting apparatus may also include the weight of the cargo.

Therefore, the lock state of the locking portion can be determined based on the data collected by the first sensor. Specifically, after the mounting/dismounting apparatus dismounts the battery to be dismounted, fourth data output by the first sensor can be obtained; and under a condition that a difference between the fourth data and a target weight is less than or equal to a third threshold, it can be determined that the locking portion is in an unlocked state; or under a condition that a difference between the fourth data and a target weight is greater than a third threshold, it can be determined that the locking portion is in a locked state. The target weight is a sum of a weight of the mounting/dismounting apparatus and a weight of the battery to be dismounted.

The third threshold may, for example, range from 0.1 ton to 0.2 ton, or may be other values, which can be specifically determined according to the actual situation.

In the foregoing technical solution, the lock state of the locking portion of the battery to be dismounted or the battery to be mounted is also determined, which can ensure the normal battery swapping and avoid the occurrence of safety accidents, thus improving the safety of the entire battery swapping process.

Similarly, to make the determined lock state of the locking portion more accurate, further, the method 200 may further include: receiving lock information sent by the electric device, where the lock information includes the lock state of the locking portion.

Optionally, the lock information sent by the electric device can be received in wireless communication mode. For example, the lock information is received through Bluetooth communication.

Optionally, the lock state of the locking portion may be determined based on the received lock information first, and then the lock state of the locking portion may be determined again based on the fourth data; or the lock state of the locking portion may be determined based on the fourth data first, and then the lock state of the locking portion may be determined based on the received lock information; or the lock state of the locking portion may be determined based on both the lock information and the fourth data.

In the foregoing technical solution, in addition to determining the lock state of the locking portion based on the fourth data output by the first sensor, the lock state of the locking portion is also determined based on the lock information sent by the electric device, that is, the expansion states of the plurality of claw arms are determined based on a plurality of parameters, so that the determined lock state of the locking portion is more accurate.

If the lock state is determined to be a locked state before the battery to be dismounted is dismounted, unlock information can be sent to a battery management unit (battery management unit, BMU) of the battery to be dismounted, where the unlock information includes the lock state of the locking portion, so that the BMU automatically unlocks the locking portion, or a reminder signal can be output on the display of the battery swapping station to remind the driver of the electric device to manually unlock the locking portion. If the lock state is determined to be an unlocked state after the battery to be mounted is mounted on the electric device, unlock information can be sent to a BMU of the battery to be mounted, where the unlock information includes the lock state of the locking portion, so that the BMU automatically locks the locking portion, or a reminder signal can be output on the display of the battery swapping station to remind the driver of the electric device to manually lock the locking portion.

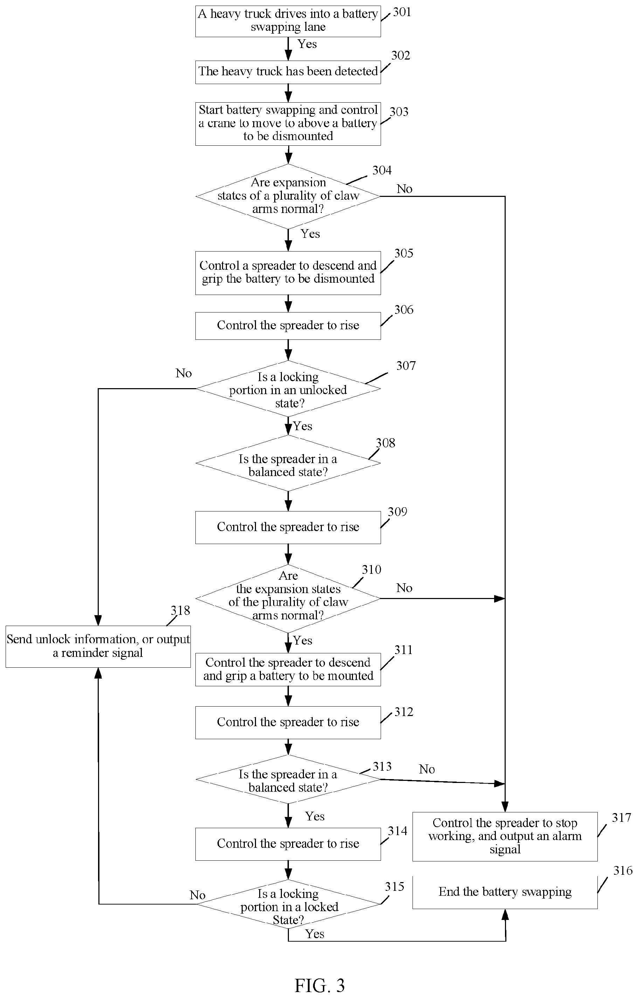

For better understanding of the balance detection method 200 according to the embodiments of this application, the following describes a balance detection method according to a possible embodiment of this application with reference to FIG. 3.

In FIG. 3, the first sensor is a weighing sensor, the second sensor is a balance sensor, the electric device is a heavy truck, and the mounting/dismounting apparatus is a spreader.

S301: The heavy truck drives into a battery swapping lane of the battery swapping station.

S302: A laser sensor on the battery swapping lane detects that the heavy truck has reached a battery swapping position, and the heavy truck sends vehicle information to a station control system.

For example, the vehicle information may include but is not limited to a vehicle identification number (vehicle identification number, VIN) of the heavy truck, a model of the heavy truck, and a Bluetooth media access control (media access control, MAC) address.

S303: Start a battery swapping process and control a crane to move from a standby position to above a battery to be dismounted.

S304: Determine whether expansion states of a plurality of claw arms of the spreader are normal.

Specifically, third data output by the balance sensor is obtained. Under a condition that the third data is less than or equal to a second threshold, it is determined that the expansion states of the plurality of claw arms are normal, and S305 is performed; or under a condition that the third data is greater than a second threshold, it is determined that the expansion states of the plurality of claw arms are abnormal, and S317 is performed.

S305: Control the spreader to descend and grip the battery to be dismounted.

S306: After the battery to be dismounted is gripped by the spreader, control the spreader to rise and control the crane to move to a battery access mechanism.

S307: Determine a lock state of a locking portion of the battery to be dismounted.

Specifically, fourth data output by the weighing sensor is obtained; and under a condition that a difference between the fourth data and a target weight is less than or equal to a third threshold, it is determined that the locking portion is in an unlocked state, and S308 is performed; or under a condition that a difference between the fourth data and a target weight is greater than a third threshold, it is determined that the locking portion is in a locked state, and S318 is performed. The target weight is a sum of a weight of the mounting/dismounting apparatus and a weight of the battery to be dismounted.

S308: Determine whether the spreader is in a balanced state.

Specifically, first data output by the weighing sensor is obtained, and whether the spreader is in a balanced state is determined based on the first data; and second data output by the balance sensor is obtained, and whether the spreader is in a balanced state is determined based on the second data. If the spreader is in a balanced state, S309 is performed; and if the spreader is in an unbalanced state, S317 is performed.

S309: Control the spreader to rise, and control the crane to move to a battery storage mechanism that meets a battery swapping requirement.

S310: Determine whether the expansion states of the plurality of claw arms of the spreader are normal.

Specifically, third data output by the balance sensor is obtained. Under a condition that the third data is less than or equal to a second threshold, it is determined that the expansion states of the plurality of claw arms are normal, and S311 is performed; or under a condition that the third data is greater than a second threshold, it is determined that the expansion states of the plurality of claw arms are abnormal, and S317 is performed.

S311: Control the spreader to descend and grip a battery to be mounted.

S312: After the battery to be mounted is gripped by the spreader, control the spreader to rise, and control the crane to move to a mounting position of the battery to be mounted.

S313: Determine whether the spreader is in a balanced state.

Specifically, first data output by the weighing sensor is obtained, and whether the spreader is in a balanced state is determined based on the first data; and second data output by the balance sensor is obtained, and whether the spreader is in a balanced state is determined based on the second data. If the spreader is in a balanced state, S314 is performed; and if the spreader is in an unbalanced state, S317 is performed.

S314: After the battery to be mounted is mounted on the electric device, control the spreader to rise.

S315: Determine a lock state of a locking portion of the battery to be mounted.

Specifically, lock information sent by the electric device is received, where the lock information includes the lock state of the locking portion. Alternatively, fifth data output by the weighing sensor may be obtained, and the lock state of the locking portion is determined based on the fifth data. If the locking portion is in a locked state, that is, the locking portion has been locked, S316 is performed; or if the locking portion is in an unlocked state, that is, the locking portion has not been locked, S318 is performed.

S316: End the battery swapping.

S317: Control the spreader to stop working, and output an alarm signal.

S318: Send unlock information to the heavy truck, or output a reminder signal.

In the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

In addition, in the case of no conflict, the embodiments of this application and/or the technical features in the embodiments of this application can be combined with each other, and the technical schemes obtained after the combination should also fall within the protection scope of this application.

The foregoing details the balance detection method according to the embodiments of this application, and the following describes a balance detection apparatus according to embodiments of this application.

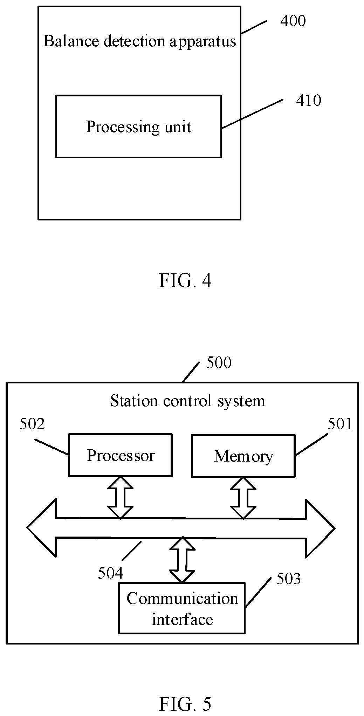

FIG. 4 is a schematic block diagram of a balance detection apparatus 400 according to an embodiment of this application. As shown in FIG. 4, the balance detection apparatus 400 may include:
a processing unit 410 configured to: in a process of swapping a battery of an electric device, obtain first data output by a first sensor.

The processing unit 410 is further configured to determine, based on the first data, whether a mounting/dismounting apparatus is in a balanced state, where the mounting/dismounting apparatus is configured to dismount a battery to be dismounted from the electric device and mount a battery to be mounted onto the electric device.

Optionally, in an embodiment of this application, the first sensor is a weighing sensor.

Optionally, in an embodiment of this application, the weighing sensor is disposed on a first surface of a connector used for connecting the mounting/dismounting apparatus, and in a direction of gravity, the first surface is a surface of the connector closer to the battery to be dismounted or the battery to be mounted; where the first data is a weight borne by the connector.

Optionally, in an embodiment of this application, the connector is provided in plurality, the weighing sensor is provided on each of the connectors, and the first data is a weight borne by each of the connectors.

Optionally, in an embodiment of this application, the processing unit 410 is specifically configured to: obtain preset data; and determine, based on a deviation value between the first data and the preset data, whether the mounting/dismounting apparatus is in a balanced state.

Optionally, in an embodiment of this application, in a case that the deviation value is less than or equal to a first threshold, the mounting/dismounting apparatus is in a balanced state; and in a case that the deviation value is greater than the first threshold, the mounting/dismounting apparatus is in an unbalanced state.

Optionally, in an embodiment of this application, the first threshold ranges from 0.1 to 0.2.

Optionally, in an embodiment of this application, the apparatus further includes: a communication unit configured to receive battery information sent by the electric device, where the battery information includes a specification parameter of the battery to be dismounted; and the processing unit 410 is specifically configured to determine preset data based on the specification parameter.

Optionally, in an embodiment of this application, the processing unit 410 is further configured to: obtain second data output by a second sensor; and after determining, based on the first data, whether the mounting/dismounting apparatus is in a balanced state, determine, based on the second data, whether the mounting/dismounting apparatus is in a balanced state.

Optionally, in an embodiment of this application, the second sensor is a balance sensor, and the second data is a tilt angle of the mounting/dismounting apparatus.

Optionally, in an embodiment of this application, the balance sensor is disposed on a second surface of the mounting/dismounting apparatus, where in a direction opposite the gravity, the second surface is a surface of the mounting/dismounting apparatus farther away from the battery to be dismounted or the battery to be mounted.

Optionally, in an embodiment of this application, in a case that the second data is less than or equal to a second threshold, the mounting/dismounting apparatus is in a balanced state; and in a case that the second data is greater than the second threshold, the mounting/dismounting apparatus is in an unbalanced state.

Optionally, in an embodiment of this application, the mounting/dismounting apparatus includes a plurality of claw arms, the plurality of claw arms being configured to grip the battery to be dismounted and the battery to be mounted, and the processing unit 410 is further configured to: determine expansion states of the plurality of claw arms before the plurality of claw arms grip the battery to be dismounted and the battery to be mounted; and/or determine expansion states of the plurality of claw arms after the plurality of claw arms grip the battery to be dismounted and the battery to be mounted.

Optionally, in an embodiment of this application, the processing unit 410 is specifically configured to: obtain third data output by the second sensor; under a condition that the third data is less than or equal to the second threshold, determine that the expansion states of the plurality of claw arms are normal; or under a condition that the third data is greater than the second threshold, determine that the expansion states of the plurality of claw arms are abnormal.

Optionally, in an embodiment of this application, the apparatus further includes: the communication unit configured to receive state information sent by the electric device, where the state information includes the expansion states of the plurality of claw arms.

Optionally, in an embodiment of this application, the second threshold is 1.3°.

Optionally, in an embodiment of this application, the processing unit 410 is further configured to determine a lock state of a locking portion of the battery to be dismounted or the battery to be mounted.

Optionally, in an embodiment of this application, the processing unit 410 is specifically configured to: after the mounting/dismounting apparatus dismounts the battery to be dismounted, obtain fourth data output by the first sensor; and under a condition that a difference between the fourth data and a target weight is less than or equal to a third threshold, determine that the locking portion is in an unlocked state; or under a condition that a difference between the fourth data and a target weight is greater than a third threshold, determine that the locking portion is in a locked state; where the target weight is a sum of a weight of the mounting/dismounting apparatus and a weight of the battery to be dismounted.

Optionally, in an embodiment of this application, the apparatus further includes: the communication unit configured to receive lock information sent by the electric device, where the lock information includes the lock state of the locking portion.

It should be understood that the apparatus 400 can implement the corresponding operations in the method 200. For brevity, details are not repeated herein.

FIG. 5 is a schematic diagram of a hardware structure of a station control system 500 according to an embodiment of this application. The station control system 500 includes a memory 501, a processor 502, a communication interface 503, and a bus 504. Communication connections between the memory 501, the processor 502, and the communication interface 503 are implemented using the bus 504.

The memory 501 may be a read-only memory (read-only memory, ROM), a static storage device, a random access memory (random access memory, RAM), or the like. The memory 501 may store a program. When the program stored in the memory 501 is executed by the processor 502, the processor 502 and the communication interface 503 are configured to execute the steps of the balance detection method according to the embodiments of this application.

The processor 502 may be a general-purpose central processing unit (central processing unit, CPU), a microprocessor, an application-specific integrated circuit (application specific integrated circuit, ASIC), a graphics processing unit (graphics processing unit, GPU), or one or more integrated circuits, and is configured to execute a related program, so as to implement functions that need to be executed by the units in the station control system according to the embodiments of this application, or execute the balance detection method according to the embodiments of this application.

The processor 502 may alternatively be an integrated circuit chip with a signal processing capability. During implementation, the steps of the balance detection method according to the embodiments of this application may be completed by hardware integrated logic circuits in the processor 502 or instructions in the form of software.

The processor 502 may alternatively be a general-purpose processor, a digital signal processor (digital signal processor, DSP), an ASIC, a field programmable gate array (field programmable gate array, FPGA) or another programmable logic device, a discrete gate or transistor logic device, or a discrete hardware component. The methods, steps, and logical block diagrams disclosed in the embodiments of this application can be implemented or executed. The general-purpose processor may be a microprocessor or any conventional processor. The steps of the method disclosed with reference to the embodiments of the application may be directly implemented by a hardware processor, or may be implemented by a combination of hardware and a software module in a processor. The software module may be located in a storage medium mature in the art, such as a random access memory, a flash memory, a read-only memory, a programmable read-only memory or electrically erasable programmable memory, or a register. The storage medium is located in the memory 501. The processor 502 reads information from the memory 501, and in combination with hardware of the processor 502, performs functions that need to be performed by the units included in the station control system according to the embodiment of this application, or performs the balance detection method according to the embodiments of this application.

A transceiver apparatus such as, without limitation, a transceiver is used at the communication interface 503, to implement communication between the station control system 500 and another device or a communication network.

The bus 504 may include a channel that transmits information between various parts (for example, the memory 501, the processor 502, and the communication interface 503) of the station control system 500.

It should be noted that merely the memory, processor, and communication interface of the station control system 500 are shown. However, during specific implementation, a person skilled in the art should understand that the station control system 500 may further include other devices required for normal running. In addition, according to a specific requirement, a person skilled in the art should understand that the station control system 500 may further include a hardware device for implementing other additional functions. In addition, a person skilled in the art should understand that the station control system 500 may alternatively include only devices required for implementing the embodiments of this application, and do not need to include all the devices shown in FIG. 5.

It should be understood that the station control system 500 may be, for example, the station control system 151 in FIG. 1.

An embodiment of this application further provides a computer-readable storage medium configured to store a computer program, where the computer program is used to execute the method according to the embodiments of this application.

The computer-readable storage medium may be a transient computer-readable storage medium or a non-transient computer readable storage medium.

An embodiment of this application further provides a computer program product, where the computer program product includes a computer program stored on a computer-readable storage medium, the computer program includes program instructions, and when the program instructions are executed by a computer, the computer is caused to perform the foregoing balance detection method.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of the embodiments of this application.

## Claims

1. A balance detection method, **characterized in that** the method comprises:
during a battery swapping process for an electric device, obtaining first data output by a first sensor; and
determining, based on the first data, whether a mounting/dismounting apparatus is in a balanced state, wherein the mounting/dismounting apparatus is configured to dismount a battery to be dismounted from the electric device and mount a battery to be mounted onto the electric device.

2. The method according to claim 1, wherein the first sensor is a weighing sensor.

3. The method according to claim 2, wherein the weighing sensor is disposed on a first surface of a connector used for connecting the mounting/dismounting apparatus, wherein in a direction of gravity, the first surface is a surface of the connector closer to the battery to be dismounted or the battery to be mounted;
wherein the first data is a weight borne by the connector.

4. The method according to claim 3, wherein the connector is provided in plurality, each of the connectors is provided with a weighing sensor, and the first data is a weight borne by each of the connectors.

5. The method according to any one of claims 1 to 4, wherein said determining, based on the first data, whether a mounting/dismounting apparatus is in a balanced state comprises:
obtaining preset data; and
determining, based on a deviation value between the first data and the preset data, whether the mounting/dismounting apparatus is in a balanced state.

6. The method according to claim 5, wherein in a case that the deviation value is less than or equal to a first threshold, the mounting/dismounting apparatus is in a balanced state; and
in a case that the deviation value is greater than the first threshold, the mounting/dismounting apparatus is in an unbalanced state.

7. The method according to claim 6, wherein the first threshold ranges from 0.1 to 0.2.

8. The method according to any one of claims 5 to 7, wherein the obtaining preset data comprises:
receiving battery information sent by the electric device, wherein the battery information comprises a specification parameter of the battery to be dismounted; and
determining the preset data based on the specification parameter.

9. The method according to any one of claims 1 to 8, wherein the method further comprises:
obtaining second data output by a second sensor; and
after determining, based on the first data, whether the mounting/dismounting apparatus is in a balanced state, determining, based on the second data, whether the mounting/dismounting apparatus is in a balanced state.

10. The method according to claim 9, wherein the second sensor is a balance sensor, and the second data is a tilt angle of the mounting/dismounting apparatus.

11. The method according to claim 10, wherein the balance sensor is disposed on a second surface of the mounting/dismounting apparatus, wherein in a direction opposite the gravity, the second surface is a surface of the mounting/dismounting apparatus farther away from the battery to be dismounted or the battery to be mounted.

12. The method according to any one of claims 9 to 11, wherein in a case that the second data is less than or equal to a second threshold, the mounting/dismounting apparatus is in a balanced state; and
in a case that the second data is greater than the second threshold, the mounting/dismounting apparatus is in an unbalanced state.

13. The method according to any one of claims 9 to 12, wherein the mounting/dismounting apparatus comprises a plurality of claw arms, the plurality of claw arms being configured to grip the battery to be dismounted and the battery to be mounted, and the method further comprises:
determining expansion states of the plurality of claw arms before the plurality of claw arms grip the battery to be dismounted and the battery to be mounted; and/or
determining expansion states of the plurality of claw arms after the plurality of claw arms grip the battery to be dismounted and the battery to be mounted.

14. The method according to claim 13, wherein the determining expansion states of the plurality of claw arms comprises:
obtaining third data output by the second sensor; and
under a condition that the third data is less than or equal to the second threshold, determining that the expansion states of the plurality of claw arms are normal; or
under a condition that the third data is greater than the second threshold, determining that the expansion states of the plurality of claw arms are abnormal.

15. The method according to claim 13 or 14, wherein the method further comprises:
receiving state information sent by the electric device, wherein the state information comprises the expansion states of the plurality of claw arms.

16. The method according to claim 12 or 15, wherein the second threshold is 1.3°.

17. The method according to any one of claims 1 to 16, wherein the method further comprises:
determining a lock state of a locking portion of the battery to be dismounted or the battery to be mounted after the mounting/dismounting apparatus dismounts the battery to be dismounted or mounts the battery to be mounted onto the electric device.

18. The method according to claim 17, wherein said determining a lock state of a locking portion of the battery to be dismounted or the battery to be mounted comprises:
after the mounting/dismounting apparatus dismounts the battery to be dismounted, obtaining fourth data output by the first sensor; and
under a condition that a difference between the fourth data and a target weight is less than or equal to a third threshold, determining that the locking portion is in an unlocked state; or
under a condition that the difference between the fourth data and the target weight is greater than a third threshold, determining that the locking portion is in a locked state,
wherein the target weight is a sum of a weight of the mounting/dismounting apparatus and a weight of the battery to be dismounted.

19. The method according to claim 17 or 18, wherein the method further comprises:
receiving lock information sent by the electric device, wherein the lock information comprises the lock state of the locking portion.

20. A balance detection apparatus, **characterized by** comprising:
a processing unit configured to: during a battery swapping process for an electric device, obtain first data output by a first sensor, wherein
the processing unit is further configured to determine, based on the first data, whether a mounting/dismounting apparatus is in a balanced state, wherein the mounting/dismounting apparatus is configured to dismount a battery to be dismounted from the electric device and mount a battery to be mounted onto the electric device.

21. The apparatus according to claim 20, wherein the first sensor is a weighing sensor.

22. The apparatus according to claim 21, wherein the weighing sensor is disposed on a first surface of a connector used for connecting the mounting/dismounting apparatus, wherein in a direction of gravity, the first surface is a surface of the connector closer to the battery to be dismounted or the battery to be mounted;
wherein the first data is a weight borne by the connector.

23. The apparatus according to claim 22, wherein the connector is provided in plurality, each of the connectors is provided with a weighing sensor, and the first data is a weight borne by each of the connectors.

24. The apparatus according to any one of claims 20 to 23, wherein the processing unit is specifically configured to:
obtain preset data; and
determine, based on a deviation value between the first data and the preset data, whether the mounting/dismounting apparatus is in a balanced state.

25. The apparatus according to claim 24, wherein in a case that the deviation value is less than or equal to a first threshold, the mounting/dismounting apparatus is in a balanced state; and
in a case that the deviation value is greater than the first threshold, the mounting/dismounting apparatus is in an unbalanced state.

26. The apparatus according to claim 25, wherein the first threshold ranges from 0.1 to 0.2.

27. The apparatus according to any one of claims 24 to 26, further comprising:
a communication unit configured to receive battery information sent by the electric device, wherein the battery information comprises a specification parameter of the battery to be dismounted; and
the processing unit is specifically configured to:
determine the preset data based on the specification parameter.

28. The apparatus according to any one of claims 20 to 27, wherein the processing unit is further configured to:
obtain second data output by a second sensor; and
after determining, based on the first data, whether the mounting/dismounting apparatus is in a balanced state, determine, based on the second data, whether the mounting/dismounting apparatus is in a balanced state.

29. The apparatus according to claim 28, wherein the second sensor is a balance sensor, and the second data is a tilt angle of the mounting/dismounting apparatus.

30. The apparatus according to claim 29, wherein the balance sensor is disposed on a second surface of the mounting/dismounting apparatus, wherein in a direction opposite the gravity, the second surface is a surface of the mounting/dismounting apparatus farther away from the battery to be dismounted or the battery to be mounted.

31. The apparatus according to any one of claims 28 to 30, wherein in a case that the second data is less than or equal to a second threshold, the mounting/dismounting apparatus is in a balanced state; and
in a case that the second data is greater than the second threshold, the mounting/dismounting apparatus is in an unbalanced state.

32. The apparatus according to any one of claims 28 to 31, wherein the mounting/dismounting apparatus comprises a plurality of claw arms, the plurality of claw arms being configured to grip the battery to be dismounted and the battery to be mounted, and the processing unit is further configured to:
determine expansion states of the plurality of claw arms before the plurality of claw arms grip the battery to be dismounted and the battery to be mounted; and/or
determine expansion states of the plurality of claw arms after the plurality of claw arms grip the battery to be dismounted and the battery to be mounted.

33. The apparatus according to claim 32, wherein the processing unit is specifically configured to:
obtain third data output by the second sensor; and
under a condition that the third data is less than or equal to the second threshold, determine that the expansion states of the plurality of claw arms are normal; or
under a condition that the third data is greater than the second threshold, determine that the expansion states of the plurality of claw arms are abnormal.

34. The apparatus according to claim 32 or 33, further comprising:
the communication unit configured to receive state information sent by the electric device, wherein the state information comprises the expansion states of the plurality of claw arms.

35. The apparatus according to claim 31 or 34, wherein the second threshold is 1.3°.

36. The apparatus according to any one of claims 20 to 35, wherein the processing unit is further configured to:
determine a lock state of a locking portion of the battery to be dismounted or the battery to be mounted before the mounting/dismounting apparatus dismounts the battery to be dismounted or after the mounting/dismounting apparatus mounts the battery to be mounted onto the electric device.

37. The apparatus according to claim 36, wherein the processing unit is specifically configured to:
obtain fourth data output by the first sensor; and
under a condition that a difference between the fourth data and a target weight is less than or equal to a third threshold, determine that the locking portion is in an unlocked state; or
under a condition that a difference between the fourth data and a target weight is greater than a third threshold, determine that the locking portion is in a locked state,
wherein the target weight is a sum of a weight of the mounting/dismounting apparatus and a weight of the battery to be dismounted, or a sum of a weight of the mounting/dismounting apparatus and a weight of the battery to be mounted.

38. The apparatus according to claim 36 or 37, further comprising:
the communication unit configured to receive lock information sent by the electric device, wherein the lock information comprises the lock state of the locking portion.

39. A station control system, **characterized in that** the station control system is applicable to a battery swapping station and comprises:
a memory configured to store a program; and
a processor configured to execute the program stored in the memory, wherein when the program stored in the memory is executed, the processor is configured to perform the balance detection method according to any one of claims 1 to 19.

40. A computer-readable storage medium, **characterized in that** the computer-readable storage medium is configured to store a computer program, wherein the computer program causes a computer to execute the balance detection method according to any one of claims 1 to 19.
